# EUROPEAN PATENT APPLICATION

(11) **EP 4 775 611 A1**
(43) Date of publication of application: **15.07.2026**
(21) Application number: 25150719.0
(22) Date of filing: 08.01.2025
(51) Int. Cl.: C08G 18/79, C08L 75/08, C09D 129/14, C09D 175/08

(54) **WATERBASED TOPCOAT WITH POLYURETHANE DISPERSION AND POLYVINYL BUTYRAL**

(71) Applicant: Sika Technology AG, 6340 Baar (CH)
(72) Inventor: CHUYAT, Siradanai, Preston, PR1 1EA (GB); ADLINGTON, Kevin, Preston, PR1 1EA (GB); BYRNE, Michael, Preston, PR1 1EA (GB); GRIMSHAW, Georgina, Preston, PR1 1EA (GB); PATEL, Mohammed Aadil, Preston, PR1 1EA (GB); ROUND, Michelle, Preston, PR1 1EA (GB); WALSCH, Bernard, Preston, PR1 1EA (GB)
(74) Representative: Sika Patent Attorneys

(57) **Abstract**

Subject of the invention is a waterbased topcoat composition comprising at least one anionic polyurethane dispersion, at least one hydroxyl group-containing polyvinyl butyral polymer and at least one polyisocyanate, whereby the weight ratio between the solids content of the polyurethane dispersion and the polyvinyl butyral polymer is 25/75 to 80/20, and the molar NCO/OH ratio is 0.4/1 to 1.5/1.

The inventive composition is highly suitable as topcoat on a basecoat, preferably a polyurethane basecoats, with durable interlayer adhesion after prolonged water exposure, thereby providing a waterproofing system particularly suitable for low slope roofs.

## Description

### Technical field

Waterbased topcoat suitable for use on polyurethane coatings, particularly for use on liquid-applied moisture-curing waterproofing membranes on low slope roofs.

### Background of the invention

Liquid-applied waterproofing membranes are known. In roofing applications, they are used as an alternative to prefabricated sheet membranes for the sealing of low slope roofs, offering easier application particularly in the case of complex roof geometries and for refurbishment purposes, providing a flexible seamless roof coating which is fully adhered to the substrate. The final waterproofing system typically contains a cured polyurethane waterproofing layer optionally covered with a topcoat, whereby the topcoat ensures a surface of high robustness against temperature, UV, hydrolysis and mechanical attack.

State of the art topcoats for this use are typically solvent-based. To avoid emissions of volatile organic compounds, it would be highly beneficial to use a waterbased topcoat for this purpose. Such a waterbased topcoat must be highly flexible after cure, with a good interlayer adhesion to the basecoat, a highly durable surface, a high UV resistance and a high resistance against long term ponding water.

Waterbased topcoats based on polyurethane dispersions are well known and described, for example in US 4,876,302 or US 11,136,472. They enable a good mechanical protection and a high UV and hydrolysis resistance. But the interlayer adhesion on polyurethane coatings is insufficient, particularly after water exposure such as long term ponding water.

Polyvinyl butyral (PVB) is a polymer, which is mainly used as hot melt interlayer film in laminated safety glass. WO 2023/139123 describes the use of recycled polyvinyl butyral in waterproofing membranes with better performance compared to membranes based on acrylic resins. The described composition is an aqueous dispersion comprising the recycled polyvinyl butyral, a plasticizer, an emulsifier, fillers and optionally pigments. Such a product is not suitable for the use as topcoat on a roof with long term ponding water.

### Summary of the invention

The task of the invention is to provide a waterbased topcoat with a good interlayer adhesion to a polyurethane basecoat after long term ponding water, suitable for the use as topcoat for waterproofing systems on low slope roofs.

This task is surprisingly achieved with a topcoat composition comprising an anionic polyurethane dispersion, a hydroxyl group-containing polyvinyl butyral polymer and a polyisocyanate in specified ratios according to claim 1.

Surprisingly, the inventive topcoat composition enables a good interlayer adhesion to a polyurethane basecoats after underwater storage and no blistering after ponding water during several months. Additionally, the topcoat composition is highly flexible with a mechanically robust surface with good UV resistance. A corresponding topcoat with the polyurethane dispersion alone shows an insufficient interlayer adhesion after underwater storage at room temperature and blistering after ponding water, see Reference-Example **E1.** Corresponding topcoats with the hydroxyl group-containing polyvinyl butyral polymer and the polyisocyanate without or with only small amounts of the polyurethane dispersion also show an insufficient interlayer adhesion after underwater storage together with an insufficient flexibility, see Reference-Examples **E8** and **E9.** Corresponding topcoats without or with a too low amount of the polyisocyanate also show an insufficient interlayer adhesion after underwater storage, see Reference-Examples **E18** to **E33.**

The inventive waterbased topcoat is surprisingly highly suitable as topcoat on polyurethane basecoats, particularly for the use as liquid-applied waterproofing systems on low slope roofs. It ensures a robust system of basecoat and topcoat with durable interlayer adhesion after prolonged water exposure, protecting the roof against ambient weathering conditions, UV and mechanical attack.

Other aspects of the invention are described in other independent claims. Preferred aspects of the invention are described in dependent claims.

### Detailed description of the invention

The subject of the invention is a waterbased topcoat composition comprising
- at least one anionic polyurethane dispersion,
- at least one hydroxyl group-containing polyvinyl butyral polymer and
- at least one polyisocyanate,
whereby the weight ratio between the solids content of the polyurethane dispersion and the polyvinyl butyral polymer is 25/75 to 80/20, and the molar NCO/OH ratio is 0.4/1 to 1.5/1.

The term "waterbased" refers to a composition which contains the main polymer as a dispersion or emulsion in water and which contains a significant amount of water, typically more than 20 weight-% in relation to the total waterbased composition. The term "polyurethane dispersion" refers to a polyurethane polymer that forms a storage stable dispersion in water.

The term "polyurethane" includes all polymers prepared by the so-called diisocyanate polyaddition process. Besides urethane groups they can also contain other groups, particularly urea groups.

The term "non-waterbased" refers to a composition which is mostly free of water upon application in liquid state and cures to form a cured polymer. It particularly contains less than 1 weight-% of water upon application in liquid state.

In this document, the term "aliphatic" means free of aromatic structures. It includes cycloaliphatic structures.

The term "storage stable" refers to the ability of a composition to be stored at room temperature in a suitable water-tight container for a certain time interval, in particular several months, without undergoing significant changes in application or end-use properties.

In this document, the term "weight-%" or "wt.%" refers to the mass fraction of a constituent of a composition based on the entire composition, unless stated otherwise. The terms "weight" and "mass" are used synonymously in this document.

In this document "room temperature" refers to a temperature of 23°C.

All industry standards and norms mentioned in this document refer to the versions valid at the time of filing the first application, if not specified.

The anionic polyurethane dispersion preferably contains carboxylic anions, more preferably carboxylic anions with ammonium counterions such as triethylammonium cations for example.

The anionic polyurethane dispersion is preferably an anionic aliphatic polyether polyurethane dispersion, preferably with a solids content of 30 to 60 weight-%. That means the polyurethane dispersion has a polyether backbone and is free of aromatic structures.

The anionic polyurethane dispersion is preferably mostly free of volatile organic solvents. It particularly contains less than 1 wt.%, preferably less than 0.5 wt.%, of organic solvents with a boiling point at atmospheric pressure below 250 °C

A particularly suitable polyurethane dispersion is preferably obtained from the reaction of at least one polyether polyol, at least one carboxylic acid, such as dimethylol propionic acid or dimethylol butanoic acid, and at least one aliphatic diisocyanate, such as for example isophorone diisocyanate, bis(4-isocyanatocyclohexyl)methane, hexamethylene diisocyanate, trimethylhexamethylene diisocyanate, cyclohexanediisocyanate or methylcyclohexanediisocyanate, followed by neutralization of the carboxylic acid groups with a suitable neutralizing agent such as for example triethylamine, followed by dispersing the neutralized isocyanate group containing polymer in water and chain extension by reaction of the isocyanate groups with a chain extender such as for example hydrazine, ethylene diamine, water or other small molecules with at least two reactive groups selected from primary amine groups, secondary amine groups and hydroxyl groups.

Suitable anionic polyurethane dispersions are commercially available. They are often also used for the coating of textiles or artificial leather. Suitable grades are for example Alberdingk^{®} U 205, U228 VP, U 355 VP, U 400 N, U 475, U 502 or U 600 (all from Alberdingk Boley), as well as similar polyurethane dispersions from other companies.

The waterbased topcoat composition comprises at least one hydroxyl group-containing polyvinyl butyral polymer. Such a polymer is typically obtained from a polyvinyl alcohol polymer by reaction with butanal, whereby some of the hydroxyl groups remain unreacted, as shown in the reaction scheme below.

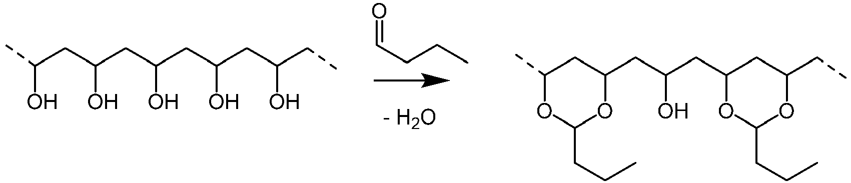

The hydroxyl group-containing polyvinyl butyral polymer has preferably an OH-number of 150 to 800 mg KOH/g, more preferably 200 to 600 mg KOH/g.

This corresponds to a preferred hydroxyl equivalent weight of approx. 64 to 374 g/eq, preferably 94 to 281 g/eq.

Such a content of hydroxyl groups allows a beneficial combination of good hydrophobic properties and a high crosslink density after reaction with a polyisocyanate.

Such polyvinyl butyral polymers are typically used as interlayer in laminated glass, particularly in shatterproof glass, or in construction glass panels.

In a preferred embodiment of the invention, the hydroxyl group-containing polyvinyl butyral polymer is a recycled product, particularly from laminated glass or construction glass panels.

Such recycled qualities of hydroxyl group-containing polyvinyl butyral polymer are commercially available, for example from Shark Solutions in the form of waterbased dispersions of post cleaned flakes with a solids content around 40 to 50 weight-%.

Preferably, the hydroxyl group-containing polyvinyl butyral polymer is used as a dispersion in water, preferably with a solids content of 30 to 60 weight-%.

In the waterbased topcoat, the weight ratio between the solids content of the polyurethane dispersion and the polyvinyl butyral polymer is 25/75 to 80/20. Preferably, the weight ratio is 30/70 to 70/30, more preferably 30/70 to 60/40.

The waterbased topcoat further comprises at least one polyisocyanate.

Preferred is an aliphatic polyisocyanate.

Suitable polyisocyanates are aliphatic monomeric diisocyanates, preferably selected from the list consisting of isophorone diisocyanate, bis(4-isocyanatocyclohexyl)methane, 1 ,6-hexane diisocyanate and 1-methyl-2,4(6)-cyclohexane diisocyanate, as well as oligomeric forms of these monomeric diisocyanates.

A particularly preferred polyisocyanate is an oligomer of 1 ,6-hexane diisocyanate. An oligomer of 1,6-hexane diisocyanate enables a good toxicological labelling, a good workability, a high crosslink density and a high UV resistance.

Particularly preferred is a trimer or 1,6-hexane diisocyanate containing isocyanurate groups.

The waterbased topcoat is preferably stored and used in the form of a two component composition, which contains a first component comprising the anionic polyurethane dispersion and the hydroxyl group-containing polyvinyl butyral polymer, and a second component comprising the polyisocyanate.

The first and the second component are packed separately, each in a moisture tight container. The separated first and second component each has a good storage stability. Upon use, the two components are mixed with each other in such a ratio, that the molar NCO/OH ratio is 0.4/1 to 1.5/1.

Preferably the molar NCO/OH ratio is 0.4/1 to 1.2/1, more preferably 0.4/1 to 1/1.

The waterbased topcoat composition may contain further ingredients.

Suitable further ingredients are particularly
- fillers, such as ground or precipitated calcium carbonates (chalk), which are optionally surface coated with a fatty acid such as stearate, barium sulfate (barytes), slate, silicates (quartz), magnesiosilicates (talc), alumosilicates (clay, kaolin), dolomite, mica, glass bubbles, silicic acid, particularly fumed silica, carbon black, graphite, microspheres, calcium oxide, calcium hydroxide, aluminium oxide, aluminium hydroxide, magnesium oxide, magnesium hydroxide or zinc oxide,
- pigments, particularly titane dioxides, iron oxides or organic pigments,
- further polymeric dispersions such as acrylic dispersions or further polyurethane dispersions containing polyester or polycarbonate chains or aromatic structures,
- adhesion promoters, particularly organoalkoxy silanes, oligomeric silanes or titanates,
- fibres, particularly glass fibres, carbon fibres, metallic fibres, ceramic fibres, plastic fibres, particularly polyamide fibres or polyethylene fibres, or natural fibres such as wool, cellulose, hemp or sisal,
- nanofibres such as graphene or carbon nanotubes,
- dyes,
- organic solvents,
- plasticizers or coalescing agents, particularly phthalates, hydrogenated phthalates, terephthalates, hydrogenated terephthalates, trimellitates, adipates, azelates, sebacates, citrates, benzoates, glycol ethers, glycol esters, polyether polyols, organic sulfonates or phosphates, polybutenes, polyisobutenes or epoxidized soy or linseed oil,
- thickeners, such as bentonites, derivates of castor oil, hydrogenated castor oil, polyamides, polyamide waxes, polyurethanes, urea compounds, fumed silica, cellulose ethers or hydrophobically modified polyoxyethylenes,
- further additives such as defoamers, surfactants, wetting agents, flow enhancers, levelling agents, deaerating agents, matting agents, antioxidants, biocides or stabilizers against UV or heat.

Such further ingredients may be part of the fist and/or part of the second component of the topcoat composition, or they can be packed as a further component, which is added to the waterbased topcoat composition upon use. Further ingredients which are reactive towards isocyanate groups are preferably not packaged together with the polyisocyanate.

Preferably, the waterbased topcoat composition further contains at least one pigment, preferably a titanium dioxide, preferably in an amount of 30 to 60 parts by weight based on 100 parts by weight of the sum of the solids content of the polyurethane dispersion and the polyvinyl butyral polymer.

Preferably, the waterbased topcoat composition contains less than 5 weight-%, preferably less than 2 weight-%, more preferably less than 1 weight-%, of organic solvents with a boiling point at atmospheric pressure below 250 °C based on the total waterbased topcoat composition.

In a preferred embodiment of the invention, the waterbased topcoat composition contains
- a first component comprising the anionic polyurethane dispersion, the polyvinyl butyral polymer and possibly further ingredients, preferably selected from titanium dioxides, surfactants, wetting agents and defoamers, whereby the solids content of the first component is preferably 45 to 60 weight-% based on the total first component, and
- a second component comprising or consisting of the polyisocyanate.

Upon use, the components of the topcoat composition are mixed in such a ratio, that the molar NCO/OH ratio is in an appropriate range.

The mixing process can be done with any suitable method, preferably by means of a propeller agitator or similar.

The mixed waterbased topcoat composition has preferably a low viscosity.

The mixed waterbased topcoat composition is preferably applied with a brush, a roller or a spray equipment onto a substrate, preferably onto a cured basecoat, which is preferably applied onto a roof, a terrace, a balcony or a façade.

The mixed waterbased topcoat composition is preferably applied in an amount of 0.1 to 1 L/m², preferably 0.2 to 0.8 L/m², more preferably 0.3 to 0.6 L/m².

The applied waterbased topcoat cures by evaporation of the volatile ingredients, mainly water, and by the reaction of isocyanate groups, particularly with hydroxyl groups of the polyvinyl butyral polymer. Additional isocyanate groups can react with water as well as other reactive ingredients possibly contained in the topcoat composition.

The cured waterbased topcoat has preferably a layer thickness of 0.05 to 0.8 mm, preferably 0.1 to 0.5 mm.

The cured waterbased topcoat is highly elastic with a high hardness, high water resistance, high UV resistance and good interlayer adhesion to the basecoat onto which it was applied.

The cured waterbased topcoat preferably has a tensile strength of more than 0.5

MPa, determined according to EN ISO 527-3 at a crosshead speed of 180 mm/min with bar-shaped test items with a length of 100 mm, a width of 25 mm and a thickness of 0.3 mm after curing in standard climate for 14 days or after curing at 60 °C for 24 hours.

The cured waterbased topcoat preferably has an elongation at break of more than 80 %, determined according to EN ISO 527-3 at a crosshead speed of 180 mm/min with bar-shaped test items with a length of 100 mm, a width of 25 mm and a thickness of 0.3 mm after curing in standard climate for 14 days or after curing at 60 °C for 24 hours.

A further subject of the invention is the use of the waterbased topcoat composition on a basecoat, particularly a polyurethane or acrylic basecoat.

Such basecoats are easily available, easy to apply and have elastic properties. To protect the surface of such a basecoat, an elastic topcoat with good interlayer adhesion, good weathering properties and high mechanical resistance is particularly suitable. To avoid high emissions of volatile solvents, the use of a waterbased topcoat is highly beneficial.

A suitable polyurethane basecoat is a waterbased or a non-waterbased polyurethane basecoat, preferably a non-waterbased polyurethane basecoat, particularly a moisture-curing polyurethane basecoat.

A suitable moisture-curing polyurethane basecoat is commercially available, for example from Sika as Sikalastic^{®} 612, Sikalastic^{®} 614, Sikalastic^{®} 625 N or Sikalastic^{®} 641.

A suitable acrylic basecoat is a waterbased acrylic basecoat, whereby the acrylic polymer can further contain portions of other monomers, such as styrene and/or polybutadiene.

Also suitable is a waterbased polyurethane-acrylic basecoat.

The described waterbased topcoat composition is highly beneficial as it shows good interlayer adhesion on various types of basecoats.

Preferably, the basecoat onto which the waterbased topcoat is preferably applied, is used for the waterproofing of a roof, a terrace, a balcony or a façade.

Preferably, the basecoat is used as a liquid applied waterproofing membrane on low slope roofs or similar surfaces such as balconies or terraces.

A further subject of the invention is a method of coating comprising the steps of
i) mixing the components of the described waterbased topcoat composition to become a macroscopically homogenous fluid,
ii) applying the mixed topcoat composition onto a basecoat in an amount of 0.1 to 1 L/m², preferably 0.2 to 0.8 L/m², more preferably 0.3 to 0.6 L/m², followed by
iii) curing the applied topcoat composition by evaporation of the volatile contents and reaction of isocyanate groups at ambient conditions.

The isocyanate groups particularly react with the hydroxyl groups of the polyvinyl butyral polymer. Additional isocyanate groups can react with water or other reactive ingredients possibly contained in the topcoat composition.

The basecoat is preferably a polyurethane or acrylic basecoat, particularly a polyurethane basecoat.

A further subject of the invention is a waterproofing system consisting of
- optionally a primer and/or an undercoat,
- a basecoat, and
- the described waterbased topcoat composition which was cured by evaporation of the volatile contents and reaction of the isocyanate groups at ambient conditions.

Preferably, the basecoat of the waterproofing system has a layer thickness of 0.5 to 5 mm, preferably 1 to 4 mm, and possibly contains a fibre reinforcing mesh.

A particularly preferred basecoat is a polyurethane basecoat including a fibre reinforcing mesh. Such a basecoat is preferably applied by a roller, whereby the fibre reinforcing mesh is preferably being worked into the uncured, still liquid basecoat, preferably also by a roller.

The basecoat can be applied in one or more than one layers.

The topcoat has preferably a layer thickness of 0.05 to 0.8 mm, more preferably 0.1 to 0.5 mm.

The waterproofing system is preferably used on a roof a balcony, a terrace or a façade.

The roof is preferably a low slope roof of a building. Another possibility is a low slope roof of a vehicle such as a mobile home or train.

The waterproofing system has high crack bridging qualities and ensures good waterproofing properties at ambient weathering conditions with long term ponding water and high UV exposure.

### Examples

The following examples illustrate the present invention without being limitative. "Standard climate" means a temperature of 23±1°C and a relative atmospheric moisture of 50±5%.

### Used substances and abbreviations:

| | |
|---|---|
| PUD U400N | Alberdingk^{®} U 400 N, aqueous anionic dispersion of an aliphatic polyether-polyurethane, solids content 40 wt.%, solvent-free, tough and highly flexible, from Alberdingk Boley |
| PVB Dispersion | Shark Dispersion SX2, waterbased dispersion of post cleaned flakes of polyvinyl butyral recycled from laminated glass and construction glass panels interlayer, solids content 45 wt.%, OH-number based on solids 390 mg KOH/g, from Shark Solutions |
| HDI-Oligomer | Basonat^{®} HI 2000 NG, oligomer of 1,6-hexane diisocyanate, NCO content 23 wt.%, from BASF |
| Titanium Dioxide | Tioxide^{®} TR 92, from Huntsman |
| Coalescent | boiling point at atmospheric pressure > 250 °C |

### Topcoat Compositions and Systems with a Basecoat:

### Example E1 to E33:

First components named **C-1** to **C-9** were made by mixing the ingredients given in Table 1 in the given amounts (in parts by weight). Each first component was stored in a watertight container.

To 100 weight parts of the respective first component as given in Tables 2 to 5, the indicated amount (in parts by weight) of the HDI-Oligomer was added and mixed in, followed by testing the mixed topcoat immediately as described below.

The Reference-Examples **E1** and **E26** to **E33** were applied without the addition of the HDI-Oligomer, as single-component topcoats.

For the testing of the robustness against **ponding water,** a concrete slab of 300 x 300 mm was freed from dust, followed by the application of Sika Concrete Primer LO (from Sika) with a brush in an amount of 0.13 L/m². After a waiting time of 24 h in standard climate, Sikalastic^{®} 614 (a single component moisture-curing elastic polyurethane coating, from Sika) was applied onto the primer in an amount of 1 L/m² by a brush and stored in standard climate for 24 h, followed by the application of the respective topcoat composition in an amount of 0.3 L/m² by a roller and curing for 7 d by storage in standard climate. The so prepared test specimens were then exposed to ponding water in such a way, that the topcoat was constantly covered with tap water in a depth of 5 to 10 mm for 4 months. The waterproofing system was regularly checked during the test. If blistering of the topcoat occurred at any time, the robustness against ponding water was considered as bad, as blistering indicates a loss of adhesion to the basecoat.

For the testing of the **underwater** interlayer **adhesion,** an aluminium plate of 40 x 100 mm was coated with Sikalastic^{®} 614 (a single component moisture-curing elastic polyurethane coating, from Sika) in an amount of 1 L/m² and stored in standard climate for 24 hours for cure, followed by the application of the respective topcoat composition in an amount of 0.3 L/m² by a roller and storage in standard climate for 24 hours for cure. The coated test specimens were then stored completely under water at room temperature. The strip peel adhesion of the topcoat to the base coat was tested after 7 d by removing the test specimen from the water, cutting into the waterproofing system and trying to peel off the topcoat from the basecoat. If the topcoat could be peeled off in an area of more than 10 % of the totally tested area, the underwater interlayer adhesion was considered as bad.

To determine the mechanical properties of each topcoat composition, the **Tensile Strength (TS)** and the **Elongation** at Break were determined according to EN ISO 527-3 at a crosshead speed of 180 mm/min. A cured film of each topcoat was made with a thickness of 0.3 mm, of which bar-shaped test items were punched with a length of 100 mm and a width of 25 mm. For a first test, the film was cured for 24 h at 60°C followed by 24 h at standard climate. These results are named **"initial".** To check the resistance against heat, a next test was made after an additional storage of further test items in an oven at 80 °C for 28 d followed by 24 h at standard climate. These results are named **"+28d oven 80°C".** To check the resistance against hydrolysis, a further test was made after an additional storage of further test items immersed in tap water at 70 °C for 28 d, followed by 24 h at standard climate. These results are named with **"+28d water 70°C"**

The results are given in Tables 2 to 5.

Reference examples are marked with **"(Ref.)".**

**Table 1: Composition of the first components C-1 to C-9.**

| **First Component** | **C-1** | **C-2** | **C-3** | **C-4** | **C-5** | **C-6** | **C-7** | **C-8** | **C-9** |
|---|---|---|---|---|---|---|---|---|---|
| PUD U400N | 64.0 | 51.2 | 44.8 | 38.4 | 32.0 | 25.6 | 19.2 | 12.8 | - |
| PVB Dispersion | - | 12.8 | 19.2 | 26.6 | 32.0 | 38.4 | 44.8 | 51.2 | 64.0 |
| Titanium Dioxide | 12.5 | 12.5 | 12.5 | 12.5 | 12.5 | 12.5 | 12.5 | 12.5 | 12.5 |
| Coalescent | 5.0 | 5.0 | 5.0 | 5.0 | 5.0 | 5.0 | 5.0 | 5.0 | 5.0 |
| additives | 6.4 | 6.4 | 6.4 | 6.4 | 6.4 | 6.4 | 6.4 | 6.4 | 6.4 |
| water | 12.1 | 12.1 | 12.1 | 12.1 | 12.1 | 12.1 | 12.1 | 12.1 | 12.1 |
| number of OH equivalents ¹ | - | 0.04 | 0.06 | 0.08 | 0.10 | 0.12 | 0.14 | 0.16 | 0.20 |
| weight ratio PU/PVB ² | 100/0 | 78/22 | 67/33 | 56/44 | 44/56 | 37/63 | 28/72 | 19/81 | 0/100 |

| | | | | | | | | | |
|---|---|---|---|---|---|---|---|---|---|
| ¹ in 100 g of total first component ² weight ratio between the solids content of the polyurethane dispersion to the solids content of the polyvinyl butyral dispersion | | | | | | | | | |

**Table 2: Composition and properties of Examples E1 to E9 at NCO/OH 1/1.**

| **Example** | **E1 (Ref.)** | **E2** | **E3** | **E4** | **E5** | **E6** | **E7** | **E8 (Ref.)** | **E9 (Ref.)** |
|---|---|---|---|---|---|---|---|---|---|
| First Component | **C-1** 100.0 | **C-2** 100.0 | **C-3** 100.0 | **C-4** 100.0 | **C-5** 100.0 | **C-6** 100.0 | **C-7** 100.0 | **C-8** 100.0 | **C-9** 100.0 |
| HDI-Oligomer | - | 7.3 | 11.0 | 14.6 | 18.3 | 21.9 | 25.6 | 29.2 | 36.5 |
| NCO/OH ¹ | - | 1/1 | 1/1 | 1/1 | 1/1 | 1/1 | 1/1 | 1/1 | 1/1 |
| Ponding Water | bad | good | good | good | good | good | good | good | good |
| Underwater Adhesion | bad | good | good | good | good | good | good | bad | bad |
| *initial (24h 60°C)* | | | | | | | | | |
| TS [MPa] | 10.1 | 14.4 | 17.4 | 19.2 | 16.4 | 13.4 | 13.9 | 14.6 | 14.8 |
| Elongation [%] | 330 | 173 | 136 | 96 | 58 | 28 | 21 | 17 | 10 |
| *+28d oven 80°C* | | | | | | | | | |
| TS [MPa] | 9.9 | 15.9 | 18.8 | 19.2 | 16.4 | 14.2 | 15.4 | 16.9 | 10.9 |
| Elongation [%] | 473 | 193 | 137 | 89 | 48 | 27 | 11 | 12 | 14 |
| *+28d water 70°C* | | | | | | | | | |
| TS [MPa] | 12.0 | 16.3 | 19.5 | 19.3 | 16.8 | 14.3 | 14.5 | 16.2 | 13.1 |
| Elongation [%] | 397 | 200 | 150 | 87 | 50 | 23 | 15 | 15 | 11 |

| | | | | | | | | | |
|---|---|---|---|---|---|---|---|---|---|
| ¹ molar NCO/OH ratio | | | | | | | | | |

**Table 3: Composition and properties of Examples E10 to E17 at NCO/OH 0.5/1.**

| **Example** | **E10** | **E11** | **E12** | **E13** | **E14** | **E15** | **E16 (Ref.)** | **E17 (Ref.)** |
|---|---|---|---|---|---|---|---|---|
| First Component | **C-2** 100.0 | **C-3** 100.0 | **C-4** 100.0 | **C-5** 100.0 | **C-6** 100.0 | **C-7** 100.0 | **C-8** 100.0 | **C-9** 100.0 |
| HDI-Oligomer | 3.7 | 5.5 | 7.3 | 9.1 | 11.0 | 12.8 | 14.6 | 18.3 |
| NCO/OH ¹ | 0.5/1 | 0.5/1 | 0.5/1 | 0.5/1 | 0.5/1 | 0.5/1 | 0.5/1 | 0.5/1 |
| Ponding Water | good | good | good | good | good | good | good | good |
| Underwater Adhesion | bad | bad | good | good | good | good | bad | bad |
| *initial (24h 60°C)* | | | | | | | | |
| TS [MPa] | 11.9 | 14.4 | 13.4 | 11.7 | 11.4 | 9.9 | 8.7 | 6.1 |
| Elongation [%] | 223 | 193 | 151 | 127 | 93 | 68 | 43 | 30 |
| *+28d oven 80°C* | | | | | | | | |
| TS [MPa] | 12.4 | 15.1 | 14.9 | 11.4 | 9.3 | 9.3 | 8.3 | 5.5 |
| Elongation [%] | 260 | 200 | 170 | 112 | 66 | 58 | 39 | 23 |
| *+28d water 70°C* | | | | | | | | |
| TS [MPa] | 11.8 | 12.4 | 12.8 | 10.7 | 10.0 | 9.4 | 9.1 | 6.9 |
| Elongation [%] | 267 | 200 | 170 | 108 | 67 | 49 | 38 | 17 |

| | | | | | | | | |
|---|---|---|---|---|---|---|---|---|
| ¹ molar NCO/OH ratio | | | | | | | | |

**Table 4: Composition and properties of Examples E18 to E25 at NCO/OH 0.3/1.**

| **Example** | **E18 (Ref.)** | **E19 (Ref.)** | **E20 (Ref.)** | **E21 (Ref.)** | **E22 (Ref.)** | **E23 (Ref.)** | **E24 (Ref.)** | **E25 (Ref.)** |
|---|---|---|---|---|---|---|---|---|
| First Component | **C-2** 100.0 | **C-3** 100.0 | **C-4** 100.0 | **C-5** 100.0 | **C-6** 100.0 | **C-7** 100.0 | **C-8** 100.0 | **C-9** 100.0 |
| HDI-Oligomer | 2.2 | 3.3 | 4.4 | 5.5 | 6.6 | 7.7 | 8.8 | 11.0 |
| NCO/OH ¹ | 0.3/1 | 0.3/1 | 0.3/1 | 0.3/1 | 0.3/1 | 0.3/1 | 0.3/1 | 0.3/1 |
| Ponding Water | bad | bad | bad | bad | bad | good | good | good |
| Underwater Adhesion | bad | bad | bad | bad | bad | bad | bad | bad |

| | | | | | | | | |
|---|---|---|---|---|---|---|---|---|
| ¹ molar NCO/OH ratio | | | | | | | | |

**Table 5: Composition and properties of Examples E26 to E33 without addition of HDI-Oligomer.**

| **Example** | **E26 (Ref.)** | **E27 (Ref.)** | **E28 (Ref.)** | **E29 (Ref.)** | **E30 (Ref.)** | **E31 (Ref.)** | **E32 (Ref.)** | **E33 (Ref.)** |
|---|---|---|---|---|---|---|---|---|
| First Component | **C-2** 100.0 | **C-3** 100.0 | **C-4** 100.0 | **C-5** 100.0 | **C-6** 100.0 | **C-7** 100.0 | **C-8** 100.0 | **C-9** 100.0 |
| HDI-Oligomer | - | - | - | - | - | - | - | - |
| Ponding Water | bad | bad | bad | bad | bad | bad | bad | good |
| Underwater Adhesion | bad | bad | bad | bad | bad | bad | bad | bad |

## Claims

1. Waterbased topcoat composition comprising
- at least one anionic polyurethane dispersion,
- at least one hydroxyl group-containing polyvinyl butyral polymer and
- at least one polyisocyanate,
whereby the weight ratio between the solids content of the polyurethane dispersion and the polyvinyl butyral polymer is 25/75 to 80/20, and the molar NCO/OH ratio is 0.4/1 to 1.5/1.

2. Waterbased topcoat composition according to claim 1, wherein the anionic polyurethane dispersion is an anionic aliphatic polyether polyurethane dispersion, preferably with a solids content of 30 to 60 weight-%.

3. Waterbased topcoat composition according to any of claims 1 or 2, wherein the hydroxyl group-containing polyvinyl butyral polymer has an OH-number of 150 to 800 mg KOH/g, preferably 200 to 600 mg KOH/g.

4. Waterbased topcoat composition according to any of claims 1 to 3, wherein the hydroxyl group-containing polyvinyl butyral polymer is a recycled product, particularly from laminated glass or construction glass panels.

5. Waterbased topcoat composition according to any of claims 1 to 4, wherein the polyvinyl butyral polymer is used as a dispersion in water, preferably with a solids content of 30 to 60 weight-%.

6. Waterbased topcoat composition according to any of claims 1 to 5, wherein the weight ratio between the solids content of the polyurethane dispersion and the polyvinyl butyral polymer is 25/75 to 70/30, preferably 25/75 to 60/40.

7. Waterbased topcoat composition according to any of claims 1 to 6, wherein the polyisocyanate is an aliphatic polyisocyanate, preferably an oligomer of 1,6-hexane diisocyanate.

8. Waterbased topcoat composition according to any of claims 1 to 7, wherein the waterbased topcoat composition further contains at least one pigment, preferably a titanium dioxide, preferably in an amount of 30 to 60 parts by weight based on 100 parts by weight of the sum of the solids content of the polyurethane dispersion and the polyvinyl butyral polymer.

9. Waterbased topcoat composition according to any of claims 1 to 8, wherein the waterbased topcoat composition contains less than 5 weight-%, preferably less than 2 weight-%, more preferably less than 1 weight-%, of organic solvents with a boiling point at atmospheric pressure below 250 °C based on the total waterbased topcoat composition.

10. Waterbased topcoat composition according to any of claims 1 to 9 containing
- a first component comprising the anionic polyurethane dispersion, the polyvinyl butyral polymer and possibly further ingredients, preferably selected from titanium dioxides, surfactants, wetting agents and defoamers, whereby the solids content of the first component is preferably 45 to 60 weight-% based on the total first component, and
- a second component comprising or consisting of the polyisocyanate.

11. Use of the waterbased topcoat composition according to any of claims 1 to 10 on a basecoat, particularly on a polyurethane or acrylic basecoat.

12. Use according to claim 11 for the waterproofing of a roof, a terrace, a balcony or a façade.

13. Method of coating comprising the steps of
i) mixing the components of the waterbased topcoat composition according to any of claims 1 to 10 to become a macroscopically homogenous fluid,
ii) applying the mixed topcoat composition onto a basecoat in an amount of 0.1 to 1 L/m², preferably 0.2 to 0.8 L/m², more preferably 0.3 to 0.6 L/m², followed by
iii) curing the applied topcoat composition by evaporation of the volatile contents and reaction of isocyanate groups at ambient conditions.

14. Waterproofing system consisting of
- optionally a primer and/or an undercoat,
- a basecoat, and
- the waterbased topcoat composition according to any of claims 1 to 10 which was cured by evaporation of the volatile contents and reaction of the isocyanate groups at ambient conditions.

15. Waterproofing system according to claim 14, wherein the basecoat has a layer thickness of 0.5 to 5 mm, preferably 1 to 4 mm, and possibly contains a fibre reinforcing mesh.
